# EUROPEAN PATENT APPLICATION

(11) **EP 4 691 910 A1**
(43) Date of publication of application: **11.02.2026**
(21) Application number: 23931402.4
(22) Date of filing: 06.04.2023
(51) Int. Cl.: B64D 17/54

(54) **FLIGHT PLATFORM, PARACHUTE DEVICE, AERIAL VEHICLE, AND CONTROL METHOD AND SYSTEM THEREFOR**

(71) Applicant: SZ Shanzhi Technology Co., Ltd., Shenzhen, Guangdong 518000 (CN)
(72) Inventor: MO, Bangjie, Shenzhen, Guangdong 518000 (CN); LAI, Zhenzhou, Shenzhen, Guangdong 518000 (CN); ZHAO, Yang, Shenzhen, Guangdong 518000 (CN); PAN, Hui, Shenzhen, Guangdong 518000 (CN); NIU, Jintao, Shenzhen, Guangdong 518000 (CN)
(74) Representative: Goddar, Heinz J.
(86) International application number: PCT/CN2023/086659
(87) International publication number: WO 2024/207333

(57) **Abstract**

A flight platform, a parachute device, an aircraft, and a control method and system thereof are provided, the flight platform includes an aircraft and a parachute device mounted on the aircraft; the aircraft includes a flight controller and a first sensing system, the parachute device includes a parachute controller and a second sensing system, the control system of the flight platform includes a flight controller in communication connection with the parachute device, the flight controller is configured to determine whether the motion state of the flight platform is abnormal based on sensing data from the first sensing system, and if the motion state of the flight platform is abnormal and the communication connection is normal, send a parachute activation instruction to the parachute device via the communication connection to control the parachute device to activate; a parachute controller is configured to determine whether the motion state of the flight platform is abnormal according to sensing data of the second sensing system, and if both the communication connection and the motion state of the flight platform are abnormal, the parachute controller controls the parachute device to activate.

## Description

### Technical Field

The present disclosure relates to the technical field of aircraft, and in particular to a flight platform, a parachute device, an aircraft, and a control method and system thereof.

### Background Art

When an aircraft falls from a high altitude, if there is no deceleration device, it can cause serious damage to the aircraft body and to life and objects on the ground (physical injury or fire). A parachute can reduce the speed of the aircraft when landing through air resistance, thereby reducing the damage. However, in the related technology, the rate of incorrect parachute deployment and the rate of failure to deploy the parachute are relatively high.

### Summary of the Invention

In a first aspect, some embodiments of the present disclosure provide a control system of a flight platform, the flight platform comprises an aircraft and a parachute device mounted on the aircraft, the aircraft comprises a flight controller and a first sensing system, the parachute device comprises a parachute controller and a second sensing system, and the control system of the flight platform comprises: the flight controller, in communication connection with the parachute device, where the flight controller is configured to determine whether a motion state of the flight platform is abnormal based on sensing data of the first sensing system, in response to that the motion state of the flight platform is abnormal and the communication connection is normal, the flight controller sends an activation instruction to the parachute device via the communication connection to control the parachute device to activate; and the parachute controller, where the parachute controller is configured to determine whether the motion state of the flight platform is abnormal based on sensing data of the second sensing system, and in response to that both the communication connection and the motion state of the flight platform are abnormal, the parachute controller controls the parachute device to activate.

In a second aspect, some embodiments of the present disclosure provide a control method of a parachute device, where the parachute device is mounted on an aircraft and in communication connection with the aircraft, the parachute device comprises a sensing system, the method comprising: in response to receiving a parachute activation instruction sent by the aircraft via the communication connection, controlling the parachute device to activate; and determining whether a motion state of the parachute device is abnormal based on sensing data of the sensing system, and controlling the parachute device to activate upon determining that both the communication connection and the motion state of the parachute device are abnormal.

In a third aspect, some embodiments of the present disclosure provide a control method of an aircraft, where the aircraft is in communication with a parachute device mounted on the aircraft, the aircraft comprises a sensing system, the method comprising: determining whether a motion state of the aircraft is abnormal based on sensing data of the sensing system; and upon determining that the motion state of the aircraft is abnormal and the communication connection is normal, sending a parachute activation instruction to the parachute device via the communication connection to control the parachute device to activate, where an abnormal state of the communication connection is detectable by the parachute device, so that the parachute device is activated in response to that the communication connection is abnormal and an abnormal motion state of the parachute device is detected.

In a fourth aspect, some embodiments of the present disclosure provide a parachute device, where the parachute device is mounted on an aircraft and in communication connection with the aircraft, the parachute device comprises a sensing system and a controller; where the controller is configured to execute instructions to implement the method according to the second aspect.

In a fifth aspect, some embodiments of the present disclosure provide an aircraft, where the aircraft is in communication connection with a parachute device mounted on the aircraft, the aircraft comprises a flight controller and a sensing system; where the flight controller is configured to execute instructions to implement the method according to the third aspect.

In a sixth aspect, some embodiments of the present disclosure provide a computer-readable storage medium, the storage medium stores computer instructions, which, when executed by a processor, implement the method according to the second aspect or the third aspect.

In a seventh aspect, some embodiments of the present disclosure provide a flight platform, the flight platform comprises an aircraft and a parachute device mounted on the aircraft, the aircraft comprises a flight controller and a first sensing system, the parachute device comprises a parachute controller and a second sensing system, where the flight controller is configured to implement functions executed by the flight controller in a control system of the flight platform according to the first aspect.

In an eighth aspect, some embodiments of the present disclosure provide a control method for a flight platform, the flight platform comprises an aircraft and a parachute device mounted on the aircraft, the aircraft comprises a flight controller and a first sensing system, the parachute device comprises a parachute controller and a second sensing system, the flight controller is in communication connection with the parachute device, the control method of the flight platform comprises: the flight controller determining whether a motion state of the flight platform is abnormal based on sensing data of the first sensing system, and in response to that the motion state of the flight platform is abnormal and the communication connection is normal, sending a parachute activation instruction to the parachute device via the communication connection to control the parachute device to activate; and the parachute controller determining whether the motion state of the flight platform is abnormal based on sensing data of the second sensing system, and in response to that both the communication connection and the motion state of the flight platform are abnormal, the parachute controller controlling the parachute device to activate.

In the embodiments of the present disclosure, the flight controller of the aircraft obtains the motion state of the flight platform and controls the parachute device to activate/start when the motion state of the flight platform is abnormal. Since the flight controller can acquire relatively comprehensive information about the flight platform, and the algorithm reliability of the flight controller is high, the motion state of the flight platform obtained by the flight controller is relatively accurate, thereby reducing the rate of incorrect parachute deployment and the rate of failure to deploy the parachute. In addition, the flight controller is also communicatively connected to the parachute device. In the event of an abnormal communication connection, the parachute device can be controlled to activate/deploy by the parachute controller, thereby achieving redundant backup of the flight controller. This ensures that the parachute device can still be controlled to activate/deploy in case of an abnormality in the flight controller, further reducing the rate of failure to deploy the parachute.

It should be understood that the above general description and the detailed description below are merely exemplary and explanatory, and do not limit the present disclosure.

### Brief Description of the Drawings

In order to more clearly illustrate the technical solutions in the embodiments of the present disclosure, a brief introduction to the drawings used in the embodiment descriptions is provided below. It is obvious that the drawings described below are merely some embodiments of the present disclosure. For a person skilled in the art, without creative effort, other drawings can also be obtained based on these drawings.
FIG. 1 is a schematic diagram of a flight platform according to some embodiments of the present disclosure.
FIG. 2 is a schematic diagram of a positional relationship between an aircraft and a parachute device according to some embodiments of the present disclosure.
FIG. 3 is an outline view of a parachute device according to some embodiments of the present disclosure.
FIG. 4 is a component diagram of a parachute device according to some embodiments of the present disclosure.
FIG. 5 is a perspective view of a parachute device according to some embodiments of the present disclosure.
FIG. 6 is a schematic diagram of a control system of a flight platform according to some embodiments of the present disclosure.
FIG. 7 is a schematic diagram of a control system of a flight platform according to some embodiments of the present disclosure.
FIG. 8 is a flowchart of a control method of a parachute device according to some embodiments of the present disclosure.
FIG. 9 is a flowchart of a control method of an aircraft according to some embodiments of the present disclosure.
FIG. 10 is an overall flowchart of a control process of a flight platform according to some embodiments of the present disclosure.
FIG. 11 is a flowchart of a control method of a flight platform according to some embodiments of the present disclosure.

### Description of the Embodiments

Some exemplary embodiments will be described in detail herein, with examples illustrated in the accompanying drawings. In the following description referring to the drawings, unless otherwise indicated, the same numerals in different drawings refer to the same or similar elements. The embodiments described in the following exemplary embodiments do not represent all embodiments consistent with the present disclosure. On the contrary, they are merely examples of devices and methods consistent with some aspects of the present disclosure as detailed in the appended claims.

The terminology used in the present disclosure is for the purpose of describing particular embodiments only and is not intended to be limiting of the present disclosure. As used in this specification and the appended claims, the singular forms "a," "the," and "said" are intended to include the plural forms as well, unless the context clearly indicates otherwise. It should also be understood that the terms "and/or" as used herein refer to and encompass any and all possible combinations of one or more of the associated listed items.

It should be understood that although the terms first, second, third, etc. may be used to describe various information in the present disclosure, such information should not be limited by these terms. These terms are only used to distinguish information of the same type from one another. For example, without departing from the scope of the present disclosure, the first information may also be referred to as the second information, and similarly, the second information may also be referred to as the first information. Depending on the context, the term "if" as used herein may be interpreted as "when," "upon," or "in response to determining."

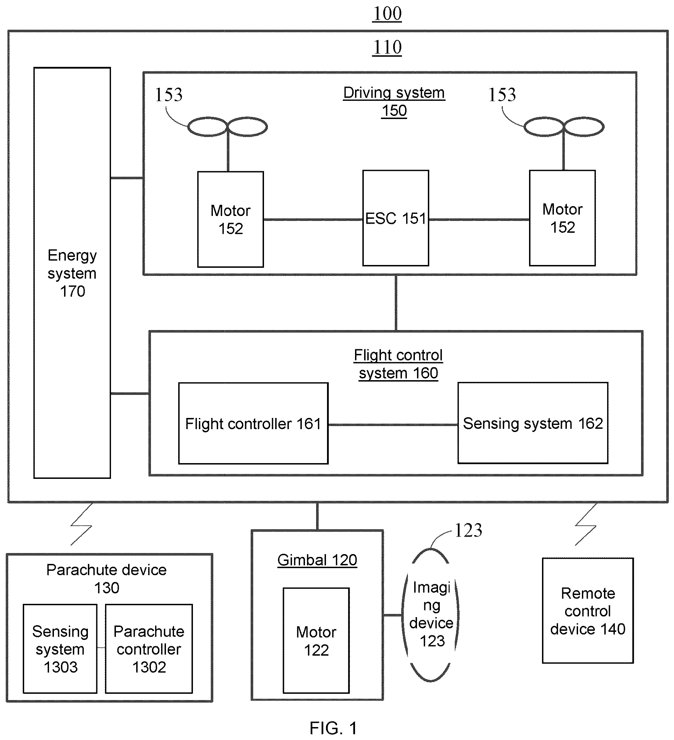

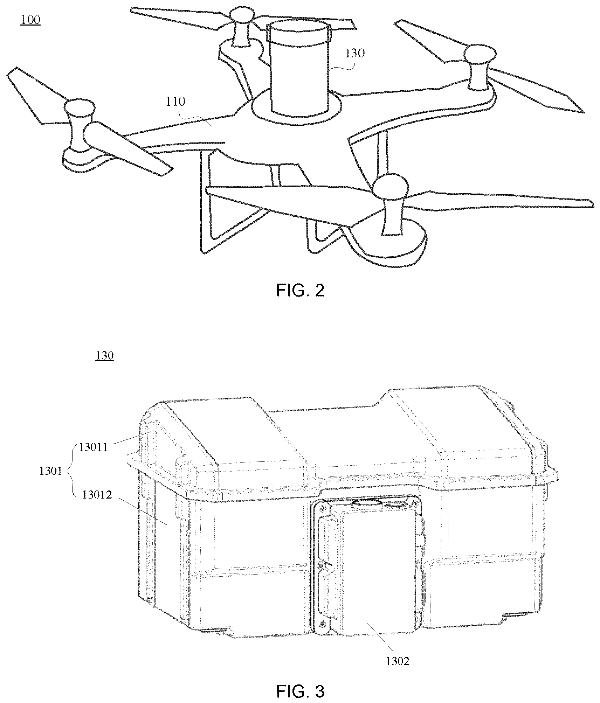

FIG. 1 and 2 illustrate schematic diagrams of the structure of a flight platform 100 according to some embodiments of the present disclosure. The flight platform 100 may include an aircraft 110, a parachute device 130, and a remote control device 140. The aircraft 110 may include a driving system 150, a flight control system 160, an energy system 170, a frame, and a gimbal 120 mounted on the frame. The aircraft 110 may communicate wirelessly with the remote control device 140 and the parachute device 130. The aircraft 110 may be various types of unmanned aerial vehicles such as agricultural unmanned aerial vehicles (UAVs) or UAVs for industrial applications, which have requirements for cyclical operation.

The frame may include a body and a landing gear (also referred to as undercarriage). The body may include a central frame and one or more arms connected to the central frame, with the one or more arms extending radially from the central frame. The landing gear is connected to the fuselage and serves a supporting function when the aircraft 110 lands.

The driving system 150 may include one or more electronic speed controllers (abbreviated as ESCs) 151, one or more propellers 153, and one or more motors 152 corresponding to the one or more propellers 153. The motors 152 are connected between the electronic speed controllers 151 and the propellers 153, and the motors 152 and the propellers 153 are disposed on the arms of the aircraft 110. The electronic speed controller 151 is configured to receive drive signals generated by the flight control system 160 and provide drive current to the motors 152 according to the drive signals, in order to control the rotational speed of the motors 152. The motors 152 are used to drive the rotation of the propellers, thereby providing power for the flight of the aircraft 110. This power enables the aircraft 110 to achieve movement in one or more degrees of freedom. In certain embodiments, the aircraft 110 may rotate around one or more axes of rotation. For example, the axes of rotation may include a roll axis, a yaw axis, and a pitch axis. It should be understood that the motors 152 may be direct current motors or alternating current motors. Additionally, the motors 152 may be brushless motors or brushed motors.

The flight control system 160 may include a flight controller 161 and a sensing system 162 of the aircraft 110. The sensing system 162 of the aircraft 110 is used to collect sensor data of the flight platform 100, including but not limited to spatial position information and status information of the flight platform 100, such as three-dimensional position, three-dimensional angle, three-dimensional velocity, three-dimensional acceleration, and three-dimensional angular velocity, etc. The sensing system 162 of the aircraft 110 may include at least one of sensors such as a gyroscope, an ultrasonic sensor, an electronic compass, an Inertial Measurement Unit (IMU), a vision sensor, a Global Navigation Satellite System (GNSS), and a barometer. For example, the Global Navigation Satellite System may be a Global Positioning System (GPS). The flight controller 161 is configured to control the motion state of the flight platform 100, for example, it may control the motion state of the flight platform 100 according to the attitude information measured by the sensing system 162 of the aircraft 110. It should be understood that the flight controller 161 may control the flight platform 100 according to pre-programmed instructions, or may control the flight platform 100 in response to one or more remote control signals from the remote control device 140.

The gimbal 120 may include a motor(s) 122. The gimbal may be used to carry an imaging device 123. The flight controller 161 may control the motion of the gimbal 120 via the motor 122. Optionally, as another embodiment, the gimbal 120 may further include a controller configured to control the motion of the gimbal 120 by controlling the motor 122. It should be understood that the gimbal 120 may be independent of the aircraft 110 or may be a part of the aircraft 110. It should be understood that the motor 122 may be a direct current motor or an alternating current motor. In addition, the motor 122 may be a brushless motor or a brushed motor.

The imaging device 123 may be a device for capturing images, such as a camera or camcorder. The imaging device 123 may communicate with the flight controller 161 and perform image capturing under the control of the flight controller 161. The imaging device 123 in this embodiment at least includes a photosensitive element, which may be, for example, a Complementary Metal Oxide Semiconductor (CMOS) sensor or a Charge-Coupled Device (CCD) sensor. It can be understood that the imaging device 123 may also be directly fixed to the aircraft 110, in which case the gimbal 120 may be omitted.

The energy system 170 may include one or more batteries and a Battery Management System (BMS). The battery may be used to supply power to the driving system 150, the flight control system 160, the gimbal 120, and the load on the gimbal 120 (e.g., the imaging device 123), and the Battery Management System is used to manage and control the charging and discharging processes of the battery.

As shown in FIG. 2, the parachute device 130 is located on the top of the aircraft 110. It can communicate wirelessly with the aircraft 110 and can be activated/deployed when the motion state of the flight platform 100 is abnormal, thereby reducing the falling speed of the flight platform 100 and improving its safety.

The remote control device 140 is located at the ground end of the flight platform 100. It can communicate wirelessly with the aircraft 110 for remote control of the aircraft 110. In some examples, the remote control device 140 may also communicate wirelessly with the parachute device 130 to control the activation/deployment of the parachute device 130, or communicate wirelessly with the aircraft 110 to control the activation of the parachute device 130 through the aircraft 110.

It should be understood that the above naming of the respective components of the flight platform 100 is merely for identification purposes and should not be construed as limiting the present disclosure.

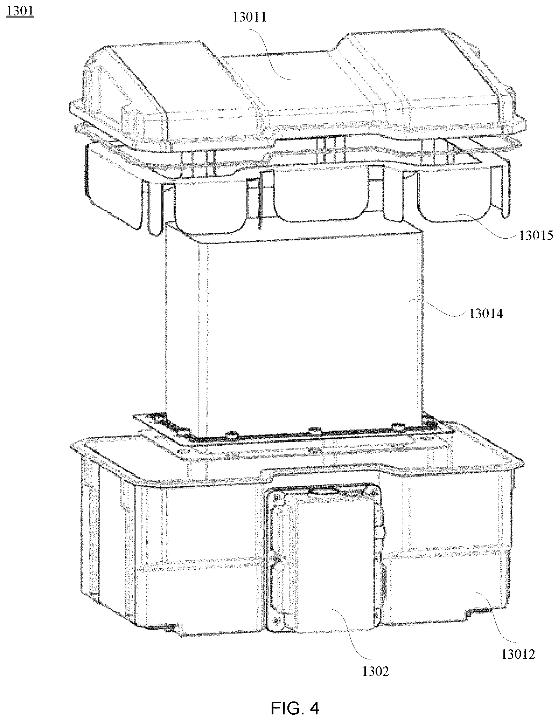

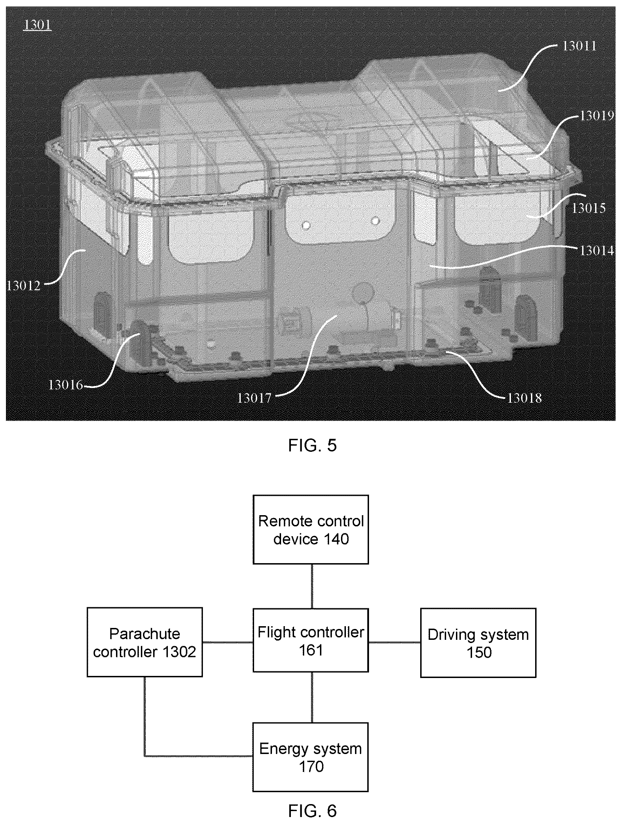

With reference to FIG. 3, FIG. 4, and FIG. 5, the parachute device 130 in some embodiments of the present disclosure may include a parachute body 1301 and a parachute controller 1302, where the parachute body 1301 may include a canopy 13011, a parachute pod 13012, parachute cords (not shown), and parachute fabric (not shown). The canopy 13011 is disposed over the parachute pod 13012. The parachute pod 13012 includes a storage space for accommodating the parachute cords and parachute fabric. Referring to FIG. 5, a plurality of parachute cord lugs 13016 may be provided inside the parachute pod 13012, and the parachute cords may be hung on the parachute cord lugs 13016. The parachute pod 13012 may also include a gas generator 13017 and an ignition device (not shown). When the parachute device is to be deployed, the ignition device ignites, causing the gas generator 13017 to generate gas and inflate an airbag 13014, so that the parachute cords and parachute fabric are ejected from the parachute pod 13012. When not ignited, the airbag 13014 may be compressed beneath the airbag fabric pressing strip 13018 inside the parachute pod 13012, thereby facilitating storage of the airbag 13014. The parachute pod 13012 may also include a PET sheet 13015. Since the parachute fabric is fluffy, using a PET sheet can prevent the parachute fabric from protruding and facilitate storage. The parachute controller 1302 may acquire sensing data from the sensing system 1303 of the parachute device 130 and determine the motion state of the flight platform 100 based on the sensing data. The sensing system 1303 of the parachute device 130 may be arranged inside the parachute pod 13012 and may include, but is not limited to, a barometer, a speed sensor, an acceleration sensor, etc. The parachute controller 1302 may be arranged in a control box of the parachute device 130, and the control box may be fixed to an outer wall of the parachute pod 13012.

In the related art, parachute deployment decisions are generally made by the parachute controller 1302, that is, the controller of the parachute device 130 may determine whether the motion state of the flight platform 100 is abnormal based on sensing information from the sensing system 1303 of the parachute device 130, and control the parachute device 130 to deploy/activate when it is determined that the motion state of the flight platform 100 is abnormal. However, due to restrictions imposed by the manufacturer of the aircraft 110 on the data interface of the aircraft 110, the information that the parachute device 130 can interact with the aircraft 110 is relatively limited. In addition, in order to ensure the general applicability of the parachute device 130, the parachute device 130 is generally not strongly coupled with the aircraft 110, so that the parachute device 130 can be applicable to aircraft 110s of different manufacturers and models. This further leads to insufficient interaction between the parachute device 130 and the aircraft 110, and the parachute device 130 cannot obtain sufficient information to determine the motion state of the flight platform 100. Furthermore, due to the potentially insufficient reliability of the algorithm of the parachute controller 1302 itself, the false deployment rate and missed deployment rate are relatively high when the deployment decision is made solely by the parachute controller 1302.

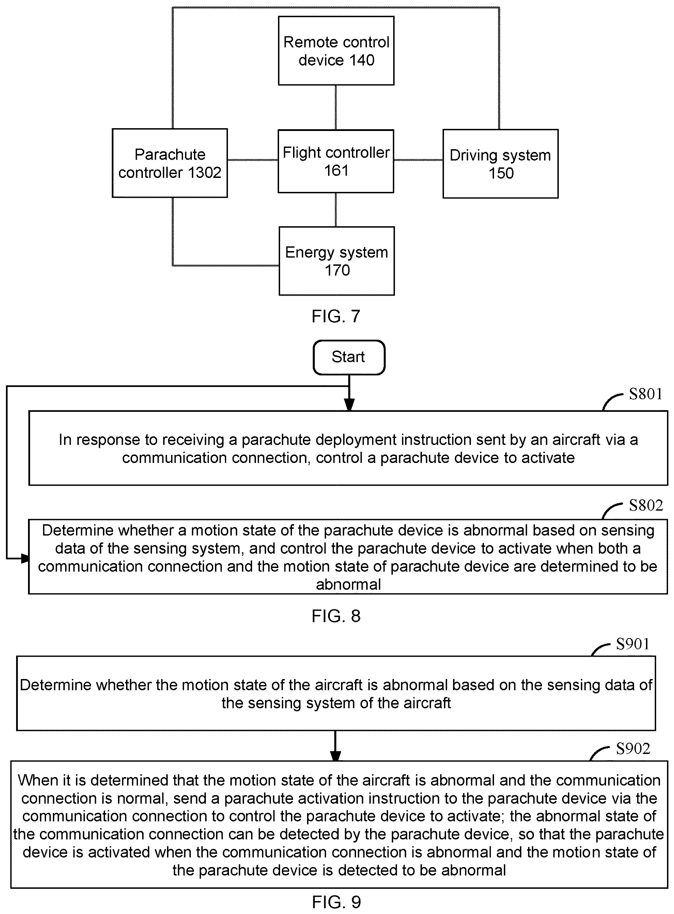

Based on the foregoing, some embodiments of the present disclosure provide a control system for the flight platform 100. The flight platform 100 includes an aircraft 110 and a parachute device 130 mounted on the aircraft 110. The aircraft 110 includes a flight controller 161 and a first sensing system. The parachute device 130 includes a parachute controller 1302 and a second sensing system. Referring to FIG. 6 and FIG. 7, the control system of the flight platform 100 may include:
The flight controller 161 is in communication connection with the parachute device 130. The flight controller 161 is configured to determine whether the motion state of the flight platform 100 is abnormal based on sensing data of the first sensing system. If the motion state of the flight platform 100 is abnormal and the communication connection is normal, the flight controller 161 sends a parachute deployment instruction to the parachute device 130 through the communication connection to control the deployment of the parachute device 130; and
The parachute controller 1302 is configured to determine whether the motion state of the flight platform 100 is abnormal based on sensing data of the second sensing system. If both the communication connection and the motion state of the flight platform 100 are abnormal, the parachute controller 1302 controls the parachute device 130 to activate.

In the above embodiments, the flight controller 161 can acquire the motion state of the flight platform 100 and control the deployment of the parachute device 130 when the motion state of the flight platform 100 is abnormal. Since the flight controller 161 can obtain more comprehensive information and the algorithm reliability of the flight controller 161 is relatively high, making the parachute deployment decision through the flight controller 161 can reduce the false deployment rate and missed deployment rate. In addition, the flight controller 161 is also in communication connection with the parachute controller 1302. In the event of the above-mentioned communication connection failure, the parachute device 130 can be controlled to deploy through the parachute controller 1302, thereby realizing redundancy backup for the flight controller 161. In this way, even if the flight controller 161 fails, the parachute device 130 can still be controlled to activate, thereby further reducing the missed deployment rate.

In some embodiments, the flight platform 100 may include a sensing system 162 of the aircraft 110 (hereinafter referred to as the first sensing system), which is configured to collect state parameters of the aircraft 110 (i.e., state parameters of the flight platform 100). These state parameters can be used to characterize the motion state of the flight platform 100. For example, the first sensing system includes a speedometer, an accelerometer, an IMU, and a barometer, which are respectively used to collect state parameters such as speed information, acceleration information, attitude information of the aircraft 110, and the barometric pressure of the environment in which the aircraft 110 is located. The flight controller 161 may communicate with the first sensing system via wired or wireless means to obtain the state parameters collected by the first sensing system, and determine whether the motion state of the flight platform 100 is abnormal based on the state parameters. For example, the flight controller 161 may determine whether the flight altitude of the flight platform 100 is below a preset altitude threshold based on the barometric pressure value collected by the barometer, may determine whether the descent speed of the flight platform 100 is greater than a preset speed threshold based on the speed information collected by the speedometer, and may also determine whether the attitude of the flight platform 100 is abnormal based on the attitude information collected by the IMU. When the descent speed of the flight platform 100 is greater than the preset speed threshold, the flight altitude is lower than the preset altitude threshold, and/or the attitude of the flight platform 100 is abnormal, the flight controller 161 may determine that the motion state of the flight platform 100 is abnormal.

When the flight controller 161 determines that the motion state of the flight platform 100 is abnormal, the flight controller 161 may control the parachute device 130 to activate. Optionally, the flight controller 161 may be in communication connection with the ignition device of the parachute device 130 to control the ignition of the ignition device of the parachute device 130. Alternatively, the flight controller 161 may be in communication connection with the parachute controller 1302 to notify the parachute controller 1302 to control the ignition of the ignition device of the parachute device 130.

The parachute controller 1302 may acquire the motion state of the flight platform 100. Specifically, the parachute controller 1302 may determine the motion state of the flight platform 100 based on the state parameters collected by the sensing system 1303 of the parachute device 130 (hereinafter referred to as the second sensing system). For example, the second sensing system may include a barometer for collecting the barometric pressure value of the environment where the parachute device 130 is located. The parachute controller 1302 may determine that the motion state of the flight platform 100 is abnormal when it is determined based on the barometric pressure value that the altitude of the parachute device 130 is lower than a preset altitude threshold.

In some embodiments, regardless of whether the communication connection between the flight controller 161 and the parachute device 130 is normal, the parachute controller 1302 can acquire the state parameters collected by the second sensing system and determine whether the motion state of the flight platform 100 is abnormal based on the state parameters. In another implementation, regardless of whether the communication connection between the flight controller 161 and the parachute device 130 is normal, the parachute controller 1302 can continuously acquire the state parameters collected by the second sensing system, but only when the communication connection between the flight controller 161 and the parachute device 130 is abnormal, the parachute controller 1302 will determine whether the motion state of the flight platform 100 is abnormal based on the state parameters collected by the second sensing system. In yet another implementation, only when the communication connection between the flight controller 161 and the parachute device 130 is abnormal, the parachute controller 1302 will acquire the state parameters collected by the second sensing system and determine whether the motion state of the flight platform 100 is abnormal based on the state parameters.

The communication connection between the flight controller 161 and the parachute device 130 may include a communication connection between the flight controller 161 and the parachute controller 1302, or may include a communication connection between the flight controller 161 and other functional units of the parachute device 130.

When both of the following conditions are met: the communication connection between the parachute device 130 and the flight controller 161 is abnormal, and the parachute controller 1302 detects that the motion state of the flight platform 100 is abnormal; the parachute controller 1302 may control the parachute device 130 to activate. That is to say, in this embodiment, the parachute deployment decision made by the flight controller 161 has a higher priority than that made by the parachute controller 1302. When the communication connection between the flight controller 161 and the parachute device 130 is normal, the parachute deployment decision is preferably made by the flight controller 161. When the above communication connection is abnormal, the parachute deployment decision is then made by the parachute controller 1302. Since the flight controller 161 obtains more comprehensive information and its algorithm reliability is relatively high, the parachute deployment decision made by the flight controller 161 is more accurate, thereby reducing the false deployment rate and the missed deployment rate.

In the above embodiments, the communication connection between the flight controller 161 and the parachute device 130 may also be used to transmit monitoring information of the aircraft 110 collected by the first sensing system to the parachute controller 1302 and/or to transmit sensing data of the parachute device 130 collected by the second sensing system to the flight controller 161. When the communication connection is abnormal, the parachute controller 1302 may acquire the motion state of the flight platform 100 based on the received sensing data from both the first sensing system and the second sensing system. When the communication connection is abnormal, the flight controller 161 may also acquire the motion state of the flight platform 100 based on the received sensing data from both the first sensing system and the second sensing system.

Assuming that the communication connection becomes abnormal at time t1, then under the above communication connection abnormality, the sensing data of the first sensing system already received by the parachute controller 1302 refers to the sensing data collected by the first sensing system before time t1 and transmitted to the parachute controller 1302 through the communication connection. Under the above communication connection abnormality, the sensing data of the second sensing system already received by the parachute controller 1302 may include the sensing data collected by the second sensing system at and after time t1.

Similarly, under the above communication connection abnormality, the sensing data of the first sensing system already received by the flight controller 161 may include the sensing data collected by the first sensing system at and after time t1. Under the above communication connection abnormality, the sensing data of the second sensing system already received by the flight controller 161 refers to the sensing data collected by the second sensing system before time t1 and transmitted to the flight controller 161 through the communication connection.

The above embodiments can acquire the motion state of the flight platform 100 by fusing the sensing data of the first sensing system and the second sensing system, which can further increase the variety and redundancy of sensors, thereby further improving the accuracy of motion state detection.

In some embodiments, the flight controller 161 may send heartbeat signals to the parachute controller 1302 at a preset frequency. The parachute controller 1302 may determine whether the above communication connection is abnormal based on the heartbeat signals. If the parachute controller 1302 does not receive a heartbeat signal within a preset time period determined based on the preset frequency, it is determined that the above communication connection is abnormal. In other embodiments, the parachute controller 1302 may send heartbeat signals to the flight controller 161 at a preset frequency, and the flight controller 161 returns a response signal to the parachute controller 1302 in response to the received heartbeat signals. If the parachute controller 1302 does not receive a response signal within a preset time period determined based on the preset frequency, it is determined that the above communication connection is abnormal. In the case where the flight controller 161 is in communication connection with other functional units of the parachute device 130, the flight controller 161 may send heartbeat signals to the other functional units, and the other functional units may send response signals to the parachute controller 1302, so that the parachute controller 1302 determines whether the communication connection between the flight controller 161 and the parachute device 130 is abnormal based on the response signals sent by the other functional units. In other embodiments, other methods may also be used to determine whether the communication connection between the flight controller 161 and the parachute device 130 is abnormal, which will not be enumerated herein.

In some embodiments, the parachute device 130 may be controlled to activate after the driving system 150 is turned off. The operation of turning off the driving system 150 can be performed by the flight controller 161 when an abnormal motion state of the flight platform 100 is detected, or by the parachute controller 1302 when an abnormal motion state of the flight platform 100 is detected. In the case where the parachute controller 1302 turns off the driving system 150, if the parachute controller 1302 is not in communication connection with the driving system 150 (as shown in FIG. 6), the parachute controller 1302 may request the flight controller 161 to turn off the driving system 150. If the parachute controller 1302 is in communication connection with the driving system 150 (as shown in FIG. 7), the parachute controller 1302 can control the driving system 150 to turn off through the communication connection. By first turning off the driving system 150 and then controlling the parachute device 130 to activate, the possibility of physical interference or entanglement between the parachute cords or canopy and the motor or blades during parachute deployment can be effectively reduced, thereby improving the effectiveness of the parachute deployment.

Some embodiments of the overall control process for the driving system 150 and the parachute device 130 can be as follows: First, the flight controller 161 obtains the motion state of the flight platform 100. If the motion state of the flight platform 100 is abnormal, the flight controller 161 controls the driving system 150 to shut down/turn off, and then controls the parachute device 130 to activate/start. At the same time, the parachute controller 1302 obtains the motion state of the flight platform 100 as well as the communication connection between the flight controller 161 and the parachute device 130. If both the communication connection and the motion state of the flight platform 100 are abnormal, the parachute controller 1302 requests the flight controller 161 to shut down/turn off the driving system 150, or the parachute controller 1302 shuts down the driving system 150 on its own. It should be noted that an abnormality in the communication connection between the flight controller 161 and the parachute device 130 may only pertain to an issue with the downlink communication link from the flight controller 161 to the parachute device 130, meaning that the parachute device 130 cannot receive signals sent by the flight controller 161, while the uplink communication link from the parachute device 130 to the flight controller 161 remains normal, meaning that the flight controller 161 can receive signals sent by the parachute device 130. Alternatively, the communication connection between the flight controller 161 and the parachute device 130 may return to normal after a brief abnormality. Therefore, in the case of an abnormal communication connection between the flight controller 161 and the parachute device 130, it is still possible to attempt to request the flight controller 161 to shut down the driving system 150.

In some embodiments, after the parachute device 130 is activated, the energy system of the flight platform 100 can also be shut down. The energy system of the flight platform 100 may include the energy system 170 of the aircraft 110, as well as the energy system of the parachute device 130. The energy system 170 of the aircraft 110 may include a battery and a battery management system, used to supply power to various functional units on the aircraft 110 (e.g., the flight controller 161, the driving system 150, etc.); the energy system of the parachute device 130 may be used to supply power to various functional units on the parachute device 130 (e.g., the parachute controller 1302).

For example, the flight controller 161 can control the shutdown of the energy system of the flight platform 100 after activating the parachute device 130. Alternatively, in the case where the parachute controller 1302 has a communication connection with the energy system of the flight platform 100, the parachute controller 1302 can also control the shutdown of the energy system of the flight platform 100 after activating the parachute device 130. By shutting down the driving system of the flight platform 100 after activating the parachute device 130, it is possible to reduce the probability of secondary hazards caused by short circuits at external interfaces after the flight platform 100 touches the ground, thereby improving the safety of the flight platform 100.

In some embodiments, the energy system of the flight platform 100 is shut down when preset conditions are met; the preset conditions include at least one of the following: the speed of the flight platform 100 exceeds a preset speed threshold, the flight platform 100 descends below a preset altitude, a first preset duration has elapsed after the parachute device 130 is activated, or a second preset duration has elapsed after the driving system 150 is shut down. When at least one of the above conditions is satisfied, it indicates that the flight platform 100 may currently be in a dangerous state. For example, if the speed of the flight platform 100 exceeds the preset speed threshold, it suggests that the flight platform 100 may have been falling for some time and is about to hit the ground. Therefore, shutting down the energy system of the flight platform 100 can reduce the probability of secondary hazards.

As mentioned above, the parachute controller 1302 can first request the flight controller 161 to shut down the driving system and then activate the parachute device 130. If the flight controller 161 fails to respond to the request to shut down the driving system 150 within a timeout period, the parachute controller 1302 can also shut down the energy system of the flight platform 100 and, after shutting down the energy system of the platform 100, control the parachute device 130 to activate. The advantage of this approach is that, in the event that the flight controller 161 malfunctions and fails to shut down the driving system 150 in time, directly shutting down the energy system of the flight platform 100 ensures that the driving system 150 is in a deactivated state before the parachute device 130 is activated, thereby improving the effectiveness of parachute deployment.

In some embodiments, if the flight controller 161 successfully responds to the request to shut down the driving system 150, it can return a response signal to the parachute controller 1302. The parachute controller 1302 can start a timer after requesting the flight controller 161 to shut down the driving system 150. If the flight controller 161 has not returned a response signal by the time the timer reaches a third preset duration, it is determined that the flight controller 161 has timed out and failed to respond to the request to shut down the driving system 150.

The third preset duration can be shorter than the second preset duration mentioned in the previous embodiments. Specifically, if the driving system 150 is successfully shut down and the parachute device 130 is then controlled to activate, the energy system of the flight platform 100 can be shut down after a longer period (i.e., the second preset duration). This approach has several advantages: firstly, since the parachute device 130 has been successfully activated, shutting down the energy system of the flight platform 100 after a longer time has a minimal impact on the safety of the flight platform 100; secondly, by shutting down the energy system of the flight platform 100 after a longer time, the flight controller 161 can record as much log data related to the motion state of the flight platform 100 as possible, facilitating subsequent operations such as determining fault conditions and system maintenance by reviewing the logs; thirdly, since the aircraft 110 is typically equipped with indicator lights, keeping the energy system of the flight platform 100 active allows for more accurate observation of the aircraft 110's position through the indicator lights, especially in low-light scenarios such as at night, reducing the risk of losing the aircraft 110. If the driving system 150 cannot be successfully shut down, the energy system of the flight platform 100 can be shut down after a shorter period (i.e., the first preset duration), thereby ensuring that the driving system 150 is in a deactivated state.

In some embodiments, as shown in FIG. 7, the parachute controller 1302 is communicatively connected to the driving system 150. In this case, if the communication connection between the flight controller 161 and the parachute device 130 is abnormal, the parachute controller 1302 can send a control signal to the driving system 150 to maintain the current motion state of the flight platform 100. By using two independent links, the flight controller 161 and the parachute controller 1302, to control the shutdown of the driving system 150, it can be better ensured that the driving system 150 is in a deactivated state before the parachute device 130 is activated, thereby improving the effectiveness of parachute deployment.

The current motion state includes the current flight altitude, current flight direction, current flight speed, and/or current flight attitude. Furthermore, if the aforementioned communication connection does not return to normal within a preset time period, the parachute controller 1302 can control the flight platform 100 to land. Additionally, if the aforementioned communication connection does not return to normal within the preset time period and the motion state of the flight platform 100 is abnormal, the parachute controller 1302 can control the parachute device 130 to activate.

In the above embodiments, the parachute controller 1302 can directly communicate with the driving system 150. In this way, when the flight controller 161 encounters an abnormality, the parachute controller 1302 can act as a backup flight control, temporarily taking over the aircraft 110 to maintain the current motion state of the flight platform 100 and waiting for the flight controller 161 to recover, thereby enhancing the safety of the flight platform 100. If the flight controller 161 does not recover within a timeout period, the parachute controller 1302 can control the flight platform 100 to descend slowly, making the decision to activate the parachute only when it detects that the attitude of the flight platform 100 becomes uncontrollable. This forms a progressively degrading safety redundancy system.

In some embodiments, as shown in FIG. 6 and 7, the control system of the flight platform 100 in the embodiments of the present disclosure further includes a remote control device 140, used to control the activation of the parachute device 130. The remote control device 140 can be a dedicated remote controller for the aircraft 110, or an electronic device installed with control software for the aircraft 110, such as a mobile phone, tablet, laptop, etc. The remote control device 140 can be communicatively connected to the flight controller 161 or the parachute controller 1302, thereby sending a remote control signal to the parachute device 130 via the flight controller 161 or the parachute controller 1302 to control the activation of the parachute device 130.

In some embodiments, three control sources, the remote control device 140, the flight controller 161, and the parachute controller 1302, are provided simultaneously to control the activation of the parachute device 130, enabling a hybrid control approach that enhances the robustness of control decisions; the control priorities of the remote control device 140, the flight controller 161, and the parachute controller 1302 decrease in that order. Since the flight controller 161 has greater sensor redundancy and variety, as well as stronger perception capabilities compared to the parachute controller 1302, it makes the parachute deployment decision when the communication connection between the parachute device 130 and the flight controller 161 is normal. If the flight controller 161 malfunctions and the aircraft 110 drifts away, the user can manually control the activation of the parachute device 130 via the remote control device 140. When the flight controller 161 loses connection with the parachute device 130 during flight (i.e., an abnormal communication connection), the parachute controller 1302 may switch to its own parachute deployment algorithm to make the deployment decision. Thus, the cooperation of multiple control sources effectively increases the success rate of parachute deployment.

When the parachute device 130 is controlled to activate via the remote control device 140, the flight controller 161 or the parachute controller 1302, upon receiving the remote control signal, can first control the driving system 150 to shut down before activating the parachute device 130, thereby improving the effectiveness of parachute deployment.

In the related art, the parachute pod 13012 of the parachute device 130 is equipped with an audio-visual alarm device (e.g., a buzzer) and a barometer. The audio-visual alarm device is used to emit sound and light alarm signals to alert and warn ground personnel during the fall of the aircraft 110, while also indicating the position of the aircraft 110; the barometer is used to determine the altitude information of the parachute device 130. However, due to waterproofing requirements, the parachute device 130 has poor breathability, which affects the effectiveness of the audio-visual alarm device and the sensing accuracy of the barometer. To address these issues, the embodiments of the present disclosure employ waterproof and breathable materials in the parachute device 130. Specifically, waterproof and breathable materials can be used in at least one of the following locations: the connection between the canopy 13011 and the parachute pod 13012 of the parachute device 130, the area around the airbag of the barometer, and the connection between the control box of the parachute device 130 and the parachute pod 13012.

The waterproof and breathable materials include, but are not limited to, foam, thermoplastic polyurethane rubber, or polytetrafluoroethylene (PTFE) membranes. By using waterproof and breathable materials, the breathability of the parachute device 130 can be improved while maintaining its waterproofing, thereby enhancing the effectiveness of the audio-visual alarm device and improving the sensing accuracy of the barometer in the parachute device 130.

In some embodiments, the control box of the parachute device 130 may also be equipped with an alarm indicator light to output visual alarm signals, alerting ground personnel during the fall of the aircraft 110.

In the related art, the parachute device 130 experiences significant impact force upon deployment, which can easily lead to parachute cord breakage and failure. To address this issue, the parachute device 130 in the embodiments of the present disclosure includes multiple parachute cords, comprising at least one elastic cord and at least one non-elastic cord, with the length of the elastic cord being shorter than that of the non-elastic cord. Optionally, the elastic cord may be a nylon cord, and the non-elastic cord may be a rubber cord. The number of elastic cords and non-elastic cords may be equal or unequal. For example, in one non-limiting embodiment, the number of both elastic cords and non-elastic cords is four. By incorporating longer non-elastic cords and shorter elastic cords, the parachute device 130 allows the elastic cords to bear the initial force during deployment. After the elastic cords absorb a portion of the energy, the non-elastic cords then take on the load, reducing the impact force on the parachute cords during deployment, lowering the risk of cord breakage and failure, and further improving the effectiveness of parachute deployment.

In some embodiments, the parachute controller 1302 is also capable of performing fault diagnosis on the parachute device 130. Through fault diagnosis, the health status of the parachute device 130 can be determined, allowing timely notification to the user in the event of a malfunction. Specifically, fault diagnosis includes, but is not limited to, diagnostics for the ignition device, the second sensing system, and/or the communication connections. The fault diagnosis of the ignition device may include assessing the ignition voltage and resistance value of the ignition device; the fault diagnosis of the second sensing system may involve checking the connection status between each sensor in the second sensing system and the parachute controller 1302; the diagnosis of the communication links includes evaluating the communication link between the parachute device 130 and the flight controller 161, as well as the communication link between the parachute device 130 and the remote control device 140.

The fault diagnosis result can be sent to the remote control device 140 via the parachute controller 1302 and displayed on the display interface of the remote control device 140. Alternatively, the parachute device 130 may also be equipped with a status indicator light to indicate the fault diagnosis result. The number of indicator lights is greater than or equal to 1. For example, different faults can be indicated by different indicator lights. Or, different faults can be indicated by the different colors of the indicator lights. By setting up the status indicator light, the user can intuitively observe the health status of the parachute device 130 without needing to check the remote control device 140.

Referring to FIG. 8, the embodiment of the present disclosure also provides a control method for the parachute device 130, where the parachute device 130 is installed on the aircraft 110 and is in communication with the aircraft 110. The parachute device 130 includes a sensing system. Referring to FIG. 8, the method includes:
Step S801: in response to receiving a parachute deployment instruction sent by an aircraft 110 via a communication connection, control a parachute device 130 to activate; and
Step S802: determine whether a motion state of the parachute device 130 is abnormal based on sensing data of the sensing system, and control the parachute device 130 to activate when both a communication connection and the motion state of parachute device 130 are determined to be abnormal.

Some embodiments of the present disclosure may be executed by parachute device 130, which can be communicatively connected with the aircraft 110. If the motion state of the aircraft 110 is abnormal and the communication connection is normal, the aircraft 110 may send an activation instruction to parachute controller 1302, causing the parachute controller 1302 to control the parachute device 130 to activate.

In addition to controlling the activation of parachute device 130 in response to the activation instruction sent by the aircraft 110, the parachute controller 1302 itself can also control the activation of parachute device 130. Specifically, the parachute controller 1302 can determine whether the motion state of parachute device 130 is abnormal based on the sensing data from the sensing system of the parachute device 130 (i.e., the aforementioned second sensing system), and control the parachute device 130 to activate when both the communication connection and the motion state of the parachute device 130 are abnormal. Since the aircraft 110 can obtain more comprehensive information and its algorithm has high reliability, making the activation decision through the aircraft 110 can reduce the rates of erroneous activations and missed activations. However, in the case of an abnormal communication connection, the parachute device 130 can make the activation decision on its own, thereby ensuring that the parachute device 130 can still be activated even if the aircraft 110 encounters an anomaly, further reducing the missed activation rate.

In some embodiments, the parachute device 130 is activated after the driving system of the aircraft 110 is shut down.

In some embodiments, the driving system 150 is shut down by the aircraft 110 when an abnormality in the motion state of the parachute device 130 is detected.

In some embodiments, the method further includes: when an abnormality in the motion state of the parachute device 130 is detected, the parachute device 130 controls driving system 150 to shut down.

In some embodiments, the controlling of the driving system 150 to shut down includes: requesting the aircraft 110 to shut down the driving system 150.

In some embodiments, the energy system of aircraft 110 is shut down after the parachute device 130 is activated.

In some embodiments, after the parachute device 130 is activated, a request is made to the aircraft 110 to shut down the energy system of aircraft 110.

In some embodiments, the parachute controller is communicatively connected to the energy system; the method further includes: after the parachute device 130 is deployed, controlling the energy system to shut down.

In some embodiments, the energy system is shut down upon satisfaction of preset conditions; the preset conditions include at least one of the following: the speed of the aircraft 110 is greater than a preset speed threshold, the aircraft 110 descends below a preset altitude, a first preset duration has elapsed after the parachute device 130 is deployed, a second preset duration has elapsed after the driving system 150 of the aircraft 110 is shut down.

In some embodiments, the controlling of the parachute device 130 to activate includes: if the aircraft 110 fails to respond to the request to shut down the driving system 150 within a timeout period, controlling the energy system of the aircraft 110 to shut down; after controlling the energy system of the aircraft 110 to shut down, controlling the parachute device 130 to activate.

In some embodiments, the method further includes: if the communication connection is abnormal and the motion state of the parachute device 130 is normal, sending a control signal to the driving system 150 of the aircraft 110, so that the driving system 150 maintains the current motion state of the aircraft 110.

In some embodiments, the method further includes: if the communication connection is not restored within a preset time period, controlling the aircraft 110 to land.

In some embodiments, the controlling of the parachute device 130 to activate includes: if the communication connection is not restored within a preset time period and the motion state of the parachute device 130 is abnormal, controlling the parachute device 130 to activate.

In some embodiments, the parachute device 130 can be deployed/activated in response to a remote control signal sent by the remote control device 140.

In some embodiments, the remote control device 140 is communicatively connected to the aircraft 110, and the remote control signal is sent to the parachute device 130 via the aircraft 110.

In some embodiments, the method further includes: receiving heartbeat signals sent by the aircraft 110 at a preset frequency; determining whether the communication connection between the parachute device 130 and the aircraft 110 is abnormal based on the heartbeat signals.

In some embodiments, the parachute device 130 includes a parachute pod 13012 and a canopy 13011, and a waterproof and breathable material is provided at the connection between the parachute pod 13012 and the canopy 13011; and/or a barometer is provided inside the parachute pod 13012 of the parachute device 130, and a waterproof and breathable material is arranged around the airbag of the barometer.

In some embodiments, the waterproof and breathable material is foam, thermoplastic polyurethane rubber, or polytetrafluoroethylene film.

In some embodiments, the parachute device 130 further includes an audible and visual alarm device, housed in the control box of the parachute device 130, configured to output an audible alarm message after the parachute device 130 is activated.

In some embodiments, the parachute device 130 includes multiple parachute cords, the multiple parachute cords including at least one elastic cord and at least one non-elastic cord, and the length of the elastic cord is shorter than that of the non-elastic cord.

In some embodiments, the method further includes: performing fault diagnosis on the parachute device 130.

In some embodiments, a status indicator light is provided on the parachute device 130, configured to indicate the result of the fault diagnosis.

The parachute device 130 and the aircraft 110 in the embodiments of the present disclosure may form a flight platform 100, and the flight platform 100 may include, in addition to the parachute device 130 and the aircraft 110, other components. It can be understood that, since the parachute device 130 is mounted on the aircraft 110, the motion state of the parachute device 130 can be used to characterize the motion state of the aircraft 110; and since the parachute device 130 and the aircraft 110 form the flight platform 100, the motion state of the parachute device 130 and the motion state of the aircraft 110 can both characterize the motion state of the flight platform 100. In some embodiments, the parachute device 130 may include a parachute controller 1302, and the method of the embodiments of the present disclosure may be executed by the parachute controller 1302. The details of each step in the method of the embodiments of the present disclosure are described in the foregoing embodiments of the control system of the flight platform 100 as functions implemented by the parachute controller 1302, and will not be repeated herein.

In addition, it can be understood that the above step S801 and step S802 are steps executed under different circumstances, with step S801 being executed when the communication connection is normal, and step S802 being executed when the communication connection is abnormal. Therefore, step S801 may be executed before step S802, or after step S802.

Referring to FIG. 9, the embodiments of the present disclosure further provide a control method for the aircraft 110. The aircraft 110 is communicatively connected to a parachute device 130 mounted on the aircraft 110, and the aircraft 110 includes a sensing system. Referring to FIG. 9, the method includes:
Step S901: determine whether the motion state of the aircraft 110 is abnormal based on the sensing data of the sensing system of the aircraft 110;
Step S902: when it is determined that the motion state of the aircraft 110 is abnormal and the communication connection is normal, send a parachute deployment/activation instruction to the parachute device 130 via the communication connection to control the deployment/activation of the parachute device 130; where the abnormal state of the communication connection can be detected by the parachute device 130, so that the parachute device 130 is deployed/activated when the communication connection is abnormal and the motion state of the parachute device 130 is detected to be abnormal.

In some embodiments, the parachute device 130 is deployed/activated after the driving system 150 of the aircraft 110 is shut down.

In some embodiments, the method further includes: controlling the driving system 150 to shut down when the motion state of the aircraft 110 is detected to be abnormal.

In some embodiments, the driving system 150 is shut down when the motion state of the aircraft 110 is detected to be abnormal.

In some embodiments, in response to a request from the parachute device 130, the driving system 150 is controlled to shut down; this request is sent when the motion state of the aircraft 110 is abnormal.

In some embodiments, the energy system of the aircraft 110 is shut down after the parachute device 130 is activated.

In some embodiments, the method further includes: after controlling the parachute device 130 to activate, shutting down the energy system of the aircraft 110.

In some embodiments, after the parachute device 130 is activated, the parachute device 130 is communicatively connected to the energy system; the aircraft 110 shuts down the energy system in response to a request from the parachute device 130.

In some embodiments, under the condition that a preset condition is met, the energy system is shut down; the preset condition includes at least one of the following: the speed of the parachute device 130 is greater than a preset speed threshold, parachute device 130 descends below a preset height, a first preset duration has passed after the parachute device 130 is activated, a second preset duration has passed after the driving system 150 of the aircraft 110 is shut down.

In some embodiments, the parachute device 130 can be activated in response to a remote control signal sent by the remote control device 140.

In some embodiments, the method further includes: forwarding the remote control signal sent by the remote control device 140 to the parachute device 130 to control the activation of the parachute device 130.

In some embodiments, parachute device 130 includes a parachute controller 1302, a parachute pod 13012, and a canopy 13011. The parachute controller 1302 is used to control the deployment of parachute device 130. A waterproof and breathable material is provided at the connection between the parachute pod 13012 and the canopy 13011; and/or a barometer is provided inside the parachute pod 13012 of parachute device 130, and a waterproof and breathable material is provided around the airbag of the barometer; and/or parachute device 130 includes a control box for housing the parachute controller 1302, and a waterproof and breathable material is provided at the connection between the control box and the parachute pod 13012.

In some embodiments, the waterproof and breathable material is foam, thermoplastic polyurethane rubber, or polytetrafluoroethylene film.

In some embodiments, the parachute device 130 further includes an audio-visual alarm device housed in the control box of the parachute device 130, configured to output audible alarm information after parachute device 130 is deployed.

In some embodiments, the parachute device 130 includes multiple parachute cords, which comprise at least one elastic cord and at least one non-elastic cord, where the length of the elastic cord is shorter than the length of the non-elastic cord.

In the above embodiments, the sensing system of the aircraft 110 may be the first sensing system in the control system of the aforementioned flight platform 100. Since the parachute device 130 is mounted on the aircraft 110, the motion state of the parachute device 130 can be used to characterize the motion state of the aircraft 110. Furthermore, the aircraft 110 and the parachute device 130 may together form the flight platform 100, and the motion states of both the parachute device 130 and the aircraft 110 can be used to characterize the motion state of the flight platform 100. Parachute device 130 may include a second sensing system and parachute controller 1302, and the parachute controller 1302 may determine whether the motion state of the parachute device 130 is abnormal based on sensing data of the second sensing system. In some embodiments, the aircraft 110 may include the flight controller 161, and the method of the present embodiment may be executed by the flight controller 161. The details of the steps in the method of the present disclosure are described in the aforementioned embodiments of the control system of flight platform 100 implemented by the flight controller 161, and will not be repeated herein.

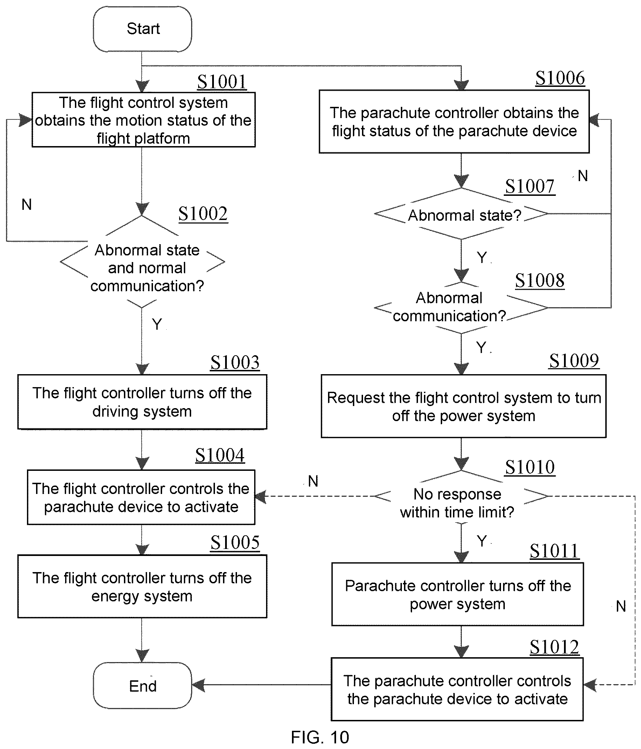

FIG. 10 shows an overall control flowchart of the flight controller 161 and the parachute controller 1302. Steps S1001 to S1005 may be executed by the flight controller 161, and steps S1006 to S1012 may be executed by the parachute controller 1302.

In step S1001, the flight controller 161 may obtain the motion state of the flight platform 100.

In step S1002, the flight controller 161 may determine whether the motion state of the flight platform 100 is abnormal. If the motion state of the flight platform 100 is abnormal and the communication connection between the flight controller 161 and the parachute device 130 is normal, step S1003 is executed; otherwise, return to step S1001.

In step S1003, the flight controller 161 may shut down the driving system 150 of the flight platform 100 and proceed to step S1004.

In step S1004, the flight controller 161 may control the parachute device 130 to deploy via the communication connection and proceed to step S1005.

In step S1005, the flight controller 161 may shut down the power system of the flight platform 100.

In step S1006, the parachute controller 1302 may acquire the motion state of the flight platform 100. This step may be executed in parallel with step S1001.

In step S1007, the parachute controller 1302 may determine whether the motion state of the flight platform 100 is abnormal. If yes, step S1008 is executed; otherwise, return to step S1006.

In step S1008, the parachute controller 1302 may determine whether the communication connection between the parachute device 130 and the flight controller 161 is abnormal. If yes, proceed to step S1009; otherwise, return to step S1006. The order of execution of steps S1007 and S1008 is not limited by the present disclosure. In addition to the sequence shown in the figure, it is also possible to determine in parallel whether the communication connection between the parachute device 130 and the flight controller 161 is abnormal and whether the motion state of the flight platform 100 is abnormal, or to first determine whether the communication connection between the parachute device 130 and the flight controller 161 is abnormal and, if the result is "yes," then determine whether the motion state of the flight platform 100 is abnormal.

In step S1009, the parachute controller 1302 may request the flight controller 161 to shut down the driving system 150 and proceed to step S1010.

In step S1010, the parachute controller 1302 may determine whether the flight controller 161 has timed out in responding to the request to shut down the driving system 150. If yes, proceed to step S1011; otherwise, proceed to step S1012. Alternatively, if the determination result is no, steps S1004 and S1005 may also be executed by the flight controller 161 to deploy the parachute device 130 and shut down the power system of the flight platform 100.

In step S1011, the parachute controller 1302 may shut down the power system of the flight platform 100 and proceed to step S1012.

In step S1012, the parachute controller 1302 may control the parachute device 130 to activate.

Referring to FIG. 3 to 5, an embodiment of the present disclosure further provides a parachute device 130. The parachute device 130 is mounted on the aircraft 110 and is in communication connection with the aircraft 110. The parachute device 130 includes a sensing system and a controller; where the controller is configured to execute instructions to implement the method executed by the parachute controller 1302 in any embodiment of the present disclosure.

Referring to FIG. 1, an embodiment of the present disclosure further provides an aircraft 110. The aircraft 110 is in communication connection with the parachute device 130 mounted on the aircraft 110 and includes a flight controller 161 and a sensing system; where the flight controller 161 is configured to execute instructions to implement the method executed by the flight controller 161 in any embodiment of the present disclosure.

Some embodiments of the present disclosure provide a flight platform 100. The flight platform 100 includes the aircraft 110 and the parachute device 130 mounted on the aircraft 110. The aircraft 110 includes the flight controller 161 and the first sensing system. The parachute device 130 includes the parachute controller 1302 and the second sensing system. The flight controller 161 is used to implement the functions executed by the flight controller 161 in the control system of the flight platform 100 of the first aspect; the parachute controller 1302 is used to implement the functions executed by the parachute controller 1302 in the control system of the flight platform 100 of the first aspect.

Some embodiments of the present disclosure further provide a computer-readable storage medium having stored thereon a computer program, which, when executed by a processor, implements the method according to any of the foregoing embodiments.

The computer-readable medium includes both permanent and non-permanent, removable and non-removable media that can be implemented by any method or technique for information storage. The information can be computer-readable instructions, data structures, modules of programs, or other data. Examples of computer storage media include, but are not limited to, phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact discs (CD-ROM), digital versatile discs (DVDs) or other optical storage, magnetic tape, tape magnetic disk storage, or other magnetic storage devices, or any other non-transitory media, which can be used to store information accessible by a computing device. As defined herein, a computer-readable medium does not include transitory computer-readable media, such as modulated data signals and carrier waves.

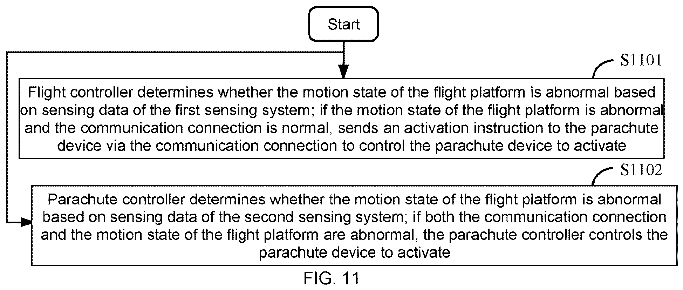

Referring to FIG. 11, an embodiment of the present disclosure further provides a control method for the flight platform 100. The flight platform 100 includes the aircraft 110 and the parachute device 130 mounted on the aircraft 110. The aircraft 110 includes the flight controller 161 and the first sensing system. The parachute device 130 includes the parachute controller 1302 and the second sensing system. The flight controller 161 is in communication connection with the parachute device 130. The control method for the flight platform includes:
Step S1101: The flight controller 161 determines whether the motion state of the flight platform 100 is abnormal based on sensing data of the first sensing system. If the motion state of the flight platform 100 is abnormal and the communication connection is normal, an activation instruction is sent to the parachute device 130 via the communication connection to control the parachute device 130 to activate; and
Step S1102: The parachute controller 1302 determines whether the motion state of the flight platform 100 is abnormal based on sensing data of the second sensing system. If both the communication connection and the motion state of the flight platform 100 are abnormal, the parachute controller 1302 controls the parachute device 130 to activate.

In some embodiments, the parachute device 130 is activated after the driving system of the flight platform 100 is turned off.

In some embodiments, the method further includes: controlling the driving system to turn off in a case where the motion state of the flight platform 100 is detected to be abnormal.

In some embodiments, the driving system is turned off in a case where the parachute device 130 detects that the motion state of the flight platform 100 is abnormal; and/or the driving system is turned off in a case where the aircraft 110 detects that the motion state of the flight platform 100 is abnormal.

In some embodiments, in response to a request from the parachute controller 1302, the driving system is controlled to turn off, and the request from the parachute controller 1302 is sent in a case where the parachute device 130 detects that the motion state of the flight platform 100 is abnormal; and/or in response to a request from the flight controller 161, the driving system is controlled to turn off, and the request from the flight controller 161 is sent in a case where the aircraft 110 detects that the motion state of the flight platform 100 is abnormal.

In some embodiments, the power system of the flight platform 100 is turned off after the parachute device 130 is activated.

In some embodiments, the method further includes: turning off the power system after controlling the parachute device 130 to activate.

In some embodiments, the parachute device 130 is in communication connection with the power system; the power system is turned off after the parachute device 130 is activated under the control of the parachute controller 1302.

In some embodiments, the power system is turned off in a case where preset conditions are satisfied; the preset conditions include at least one of the following: the speed of the flight platform 100 is greater than a preset speed threshold, the flight platform 100 descends below a preset altitude, a first preset duration has elapsed after the parachute device 130 is activated, and a second preset duration has elapsed after the driving system of the flight platform 100 is turned off.

In some embodiments, the parachute device 130 can be activated in response to a remote control signal sent by the remote control device 140.

In some embodiments, the method further includes: performing fault diagnosis on the parachute device 130.

In some embodiments, a status indicator light is provided on the parachute device 130 for indicating the fault diagnosis result.

From the above description of the embodiments, it can be understood clearly by a person skilled in the art that the embodiments of the present specification can be implemented by means of software in combination with a necessary general hardware platform. Based on such understanding, the technical solutions of the embodiments of the present specification, or in other words, the parts that contribute to the prior art, can essentially be embodied in the form of a software product. The computer software product can be stored in a storage medium, such as ROM/RAM, magnetic disk, optical disk, etc., and includes several instructions to enable a computer device (which may be a personal computer, a server, or a network device, etc.) to execute the methods described in each embodiment or some parts of the embodiments of the present specification.

The system, device, module, or unit described in the above embodiments may specifically be implemented by a computer chip or entity, or by a product having a certain function. A typical implementation device is a computer, and the specific form of the computer may be a personal computer, laptop computer, cellular phone, camera phone, smart phone, personal digital assistant, media player, navigation device, email receiving and sending device, game console, tablet computer, wearable device, or a combination of any of these devices.

The various technical features in the above embodiments may be combined arbitrarily, as long as there is no conflict or contradiction among the features. However, due to space limitations, individual descriptions are not provided for each combination. Therefore, any arbitrary combination of the various technical features in the above embodiments also falls within the scope of the present disclosure.

Other embodiments of the present disclosure will be readily apparent to a person skilled in the art upon consideration of the specification and practice of the disclosure disclosed herein. The present disclosure is intended to cover any variations, uses, or adaptations of the disclosure that follow the general principles of the disclosure and include known or customary techniques in the art that are not disclosed herein. The specification and embodiments are to be considered as exemplary only, and the true scope and spirit of the present disclosure are indicated by the following claims.

It should be understood that the present disclosure is not limited to the precise structures already described above and shown in the accompanying drawings, and various modifications and changes may be made without departing from the scope thereof. The scope of the present disclosure is only limited by the appended claims.

The above descriptions are merely preferred embodiments of the present disclosure and are not intended to limit the present disclosure. Any modifications, equivalent substitutions, improvements, etc., made within the spirit and principles of the present disclosure should be included within the scope of protection of the present disclosure.

## Claims

1. A control system of a flight platform, **characterized in that** the flight platform comprises an aircraft and a parachute device mounted on the aircraft, the aircraft comprises a flight controller and a first sensing system, the parachute device comprises a parachute controller and a second sensing system, and the control system of the flight platform comprises:
the flight controller, in communication connection with the parachute device, wherein the flight controller is configured to determine whether a motion state of the flight platform is abnormal based on sensing data of the first sensing system, in response to that the motion state of the flight platform is abnormal and the communication connection is normal, the flight controller sends an activation instruction to the parachute device via the communication connection to control the parachute device to activate; and
the parachute controller, wherein the parachute controller is configured to determine whether the motion state of the flight platform is abnormal based on sensing data of the second sensing system, and in response to that both the communication connection and the motion state of the flight platform are abnormal, the parachute controller controls the parachute device to activate.

2. The control system of the flight platform according to claim 1, **characterized in that** the parachute device is activated after a driving system of the flight platform is turned off.

3. The control system of the flight platform according to claim 2, **characterized in that** the flight controller is configured to control the driving system to turn off when the motion state of the flight platform is determined to be abnormal.

4. The control system of the flight platform according to claim 2, **characterized in that** the parachute controller is configured to control the driving system to turn off when the motion state of the flight platform is determined to be abnormal.

5. The control system of the flight platform according to claim 4, **characterized in that** the parachute controller is configured to send a request to the flight controller to turn off the driving system when the motion state of the flight platform is determined to be abnormal.

6. The control system of the flight platform according to claim 1, **characterized in that** an energy system of the flight platform is turned off after the parachute device is activated.

7. The control system of the flight platform according to claim 6, **characterized in that** the flight controller is further configured to control the energy system to be turned off after controlling the parachute device to be activated.

8. The control system of the flight platform according to claim 6, **characterized in that** the parachute controller is in communication connection with the energy system; and the parachute controller is further configured to control the energy system to be turned off after controlling the parachute device to be activated.

9. The control system of the flight platform according to any one of claims 6 to 8, **characterized in that** the energy system is turned off when a preset condition is satisfied; and the preset condition comprises at least one of:
a speed of the flight platform is greater than a preset speed threshold,
the flight platform descends below a preset altitude,
a first preset duration is passed after the parachute device is activated, or
a second preset duration is passed after the driving system of the flight platform is turned off.

10. The control system of the flight platform according to claim 5, **characterized in that** the parachute controller is configured to:
in response to that the flight controller fails to respond to the request within a time period, control the energy system of the flight platform to be turned off; and
after controlling the energy system to be turned off, control the parachute device to be activated.

11. The control system of the flight platform according to claim 1, **characterized in that** the parachute controller is further configured to: in response to that the communication connection is abnormal, send a control signal to a driving system of the flight platform to cause the driving system to maintain a current motion state of the flight platform.

12. The control system of the flight platform according to claim 11, **characterized in that** the parachute controller is further configured to: in response to that the communication connection is not restored to normal within a preset time period, control the aircraft to land.

13. The control system of the flight platform according to claim 11 or 12, **characterized in that** the parachute controller is configured to: in response to that the communication connection is not restored to normal within a/the preset time period and the motion state of the flight platform is abnormal, control the parachute device to activate.

14. The control system of the flight platform according to claim 1, **characterized in that** the control system further comprises: a remote control device configured to control the parachute device to activate.

15. The control system of the flight platform according to claim 14, **characterized in that** the remote control device is in communication connection with the flight controller to send, via the flight controller, a remote control signal for controlling the parachute device to activate; or
the remote control device is in communication connection with the parachute controller to send, via the parachute controller, a remote control signal for controlling the parachute device to activate.

16. The control system of the flight platform according to claim 1, **characterized in that** the parachute controller is configured to:
receive a heartbeat signal sent by the flight controller at a preset frequency; and
determine whether the communication connection between the parachute device and the flight controller is abnormal based on the heartbeat signal.

17. The control system of the flight platform according to claim 1, **characterized in that** the parachute device comprises a parachute pod and a canopy, and a waterproof and breathable material is provided at a connection between the parachute pod and the canopy; and/or
a barometer is provided in the parachute pod of the parachute device, and a waterproof and breathable material is provided around an airbag of the barometer; and/or
the parachute device comprises a control box for accommodating the parachute controller, and a waterproof and breathable material is provided at a connection between the control box and the parachute pod.

18. The control system of the flight platform according to claim 17, **characterized in that** the waterproof and breathable material is a foam, a thermoplastic polyurethane rubber, or a polytetrafluoroethylene membrane.

19. The control system of the flight platform according to claim 17, **characterized in that** the parachute device further comprises an audio-visual alarm device, accommodated in the control box of the parachute device, for outputting audio-visual alarm information after the parachute device is activated.

20. The control system of the flight platform according to claim 1, **characterized in that** the parachute device comprises a plurality of parachute cords, the plurality of parachute cords comprises at least one elastic cord and at least one non-elastic cord, and a length of the elastic cord is less than a length of the non-elastic cord.

21. The control system of the flight platform according to claim 1, **characterized in that** the parachute controller is further configured to perform fault diagnosis on the parachute device.

22. The control system of the flight platform according to claim 21, **characterized in that** a status indicator light is provided on the parachute device for indicating a fault diagnosis result.

23. The control system of the flight platform according to claim 1, **characterized in that** the communication connection is configured to transmit the sensing data of the first sensing system and the sensing data of the second sensing system.

24. The control system of the flight platform according to claim 23, **characterized in that** when the communication connection is abnormal, the parachute controller obtains the motion state of the flight platform based on the sensing data of the first sensing system and the sensing data of the second sensing system; and/or
the flight controller is configured to obtain the motion state of the flight platform based on the sensing data of the first sensing system and the sensing data of the second sensing system.

25. A control method of a parachute device, wherein the parachute device is mounted on an aircraft and in communication connection with the aircraft, **characterized in that** the parachute device comprises a sensing system, the method comprising:
in response to receiving a parachute activation instruction sent by the aircraft via the communication connection, controlling the parachute device to activate; and
determining whether a motion state of the parachute device is abnormal based on sensing data of the sensing system, and controlling the parachute device to activate upon determining that both the communication connection and the motion state of the parachute device are abnormal.

26. The method according to claim 25, **characterized in that** the parachute device is activated after the driving system of the aircraft is turned off.

27. The method according to claim 26, **characterized in that** the driving system is turned off by the aircraft when an abnormal motion state of the parachute device is detected.

28. The method according to claim 26, **characterized in that** the method further comprises:
when an abnormal motion state of the parachute device is detected, the parachute device controlling the driving system to turn off.

29. The method according to claim 28, **characterized in that** the controlling of the driving system to turn off comprises:
requesting the aircraft to turn off the driving system.

30. The method according to claim 25, **characterized in that** an energy system of the aircraft is turned off after the parachute device is activated.

31. The method according to claim 30, **characterized in that** after the parachute device is activated, the aircraft is requested to turn off the energy system.

32. The method according to claim 30, **characterized in that** the parachute device is in communication with the energy system; the method further comprises: after the parachute device is activated, controlling the energy system to turn off.

33. The method according to any one of claims 30 to 32, **characterized in that** the energy system is turned off upon satisfying a preset condition; the preset condition comprises at least one of:
a speed of the aircraft is greater than a preset speed threshold,
the aircraft descends below a preset altitude,
a first preset duration is passed after the parachute device is activated, or
a second preset duration is passed after the driving system of the aircraft is turned off.

34. The method according to claim 29, **characterized in that** the controlling of the parachute device to activate comprises:
in response to that the aircraft fails to respond to the request to turn off the driving system within a time period, controlling the energy system of the aircraft to turn off; and
after controlling the energy system to turn off, controlling the parachute device to activate.

35. The method according to claim 25, **characterized in that** the method further comprises:
in response to that the communication connection is abnormal and the motion state of the parachute device is normal, sending a control signal to the driving system of the aircraft to maintain a current motion state of the aircraft.

36. The method according to claim 35, **characterized in that** the method further comprises:
in response to that the communication connection is not restored to normal within a preset time period, controlling the aircraft to land.

37. The method according to claim 35 or 36, **characterized in that** the controlling of the parachute device to activate comprises:
In response to that the communication connection is not restored to normal within a/the preset time period and the motion state of the parachute device is abnormal, controlling the parachute device to activate.

38. The method according to claim 25, **characterized in that** the parachute device is capable of activating in response to a remote control signal sent by a remote control device.

39. The method according to claim 38, **characterized in that** the remote control device is in communication with the aircraft, and the remote control signal is sent to the parachute device via the aircraft.

40. The method according to claim 25, **characterized in that** the method further comprises:
receiving a heartbeat signal sent by the aircraft at a preset frequency; and
determining whether the communication connection between the parachute device and the aircraft is abnormal based on the heartbeat signal.

41. The method according to claim 25, **characterized in that** the parachute device comprises a parachute pod and a canopy, and a waterproof and breathable material is provided at a connection between the parachute pod and the canopy; and/or
a barometer is provided inside the parachute pod of the parachute device, and a waterproof and breathable material is provided around an airbag of the barometer.

42. The method according to claim 41, **characterized in that** the waterproof and breathable material is a foam, a thermoplastic polyurethane rubber, or a polytetrafluoroethylene membrane.

43. The method according to claim 41, **characterized in that** the parachute device further comprises an audio-visual alarm device, accommodated in the control box of the parachute device, for outputting audio-visual alarm information after the parachute device is activated.

44. The method according to claim 25, **characterized in that** the parachute device comprises a plurality of parachute cords, the plurality of parachute cords comprises at least one elastic cord and at least one non-elastic cord, and a length of the elastic cord is less than a length of the non-elastic cord.

45. The method according to claim 25, **characterized in that** the method further comprises:
performing fault diagnosis on the parachute device.

46. The method according to claim 45, **characterized in that** a status indicator light is provided on the parachute device for indicating a fault diagnosis result.

47. A control method of an aircraft, wherein the aircraft is in communication with a parachute device mounted on the aircraft, **characterized in that** the aircraft comprises a sensing system, the method comprising:
determining whether a motion state of the aircraft is abnormal based on sensing data of the sensing system; and
upon determining that the motion state of the aircraft is abnormal and the communication connection is normal, sending a parachute activation instruction to the parachute device via the communication connection to control the parachute device to activate, wherein
an abnormal state of the communication connection is detectable by the parachute device, so that the parachute device is activated in response to that the communication connection is abnormal and an abnormal motion state of the parachute device is detected.

48. The method according to claim 47, **characterized in that** the parachute device is activated after the driving system of the aircraft is turned off.

49. The method according to claim 48, **characterized in that** the method further comprises:
in response to that an abnormal motion state of the aircraft is detected, controlling the driving system to turn off.

50. The method according to claim 48, **characterized in that** the driving system is turned off when an abnormal motion state of the aircraft is detected.

51. The method according to claim 50, **characterized in that** in response to a request from the parachute device, the driving system is controlled to turn off; the request is sent in response to the abnormal motion state of the aircraft.

52. The method according to claim 47, **characterized in that** an energy system of the aircraft is turned off after the parachute device is activated.

53. The method according to claim 52, **characterized in that** the method further comprises: after controlling the parachute device to activate, turning off the energy system.

54. The method according to claim 52, **characterized in that** after the parachute device is activated, the parachute device is in communication connection with the energy system; and the aircraft turns off the energy system in response to a request from the parachute device.

55. The method according to any one of claims 52 to 54, **characterized in that** the energy system is turned off upon satisfying a preset condition; the preset condition comprises at least one of:
a speed of the parachute device is greater than a preset speed threshold,
the parachute device descends below a preset altitude,
a first preset duration is passed after the parachute device is activated, or
a second preset duration is passed after the driving system of the aircraft is turned off.

56. The method according to claim 48, **characterized in that** the parachute device is capable of activation in response to a remote control signal sent by a remote control device.

57. The method according to claim 56, **characterized in that** the method further comprises: forwarding the remote control signal sent by the remote control device to the parachute device to control the parachute device to activate.

58. The method according to claim 47, **characterized in that** the parachute device comprises a parachute controller, a parachute pod and a canopy, the parachute controller is configured to control the parachute device to activate, and a waterproof and breathable material is provided at a connection between the parachute pod and the canopy; and/or
a barometer is provided inside the parachute pod of the parachute device, and a waterproof and breathable material is provided around an airbag of the barometer; and/or
the parachute device comprises a control box for accommodating the parachute controller, and a waterproof and breathable material is provided at a connection between the control box and the parachute pod.

59. The method according to claim 58, **characterized in that** the waterproof and breathable material is a foam, a thermoplastic polyurethane rubber, or a polytetrafluoroethylene membrane.

60. The method according to claim 58, **characterized in that** the parachute device further comprises an audio-visual alarm device, accommodated in the control box of the parachute device, for outputting audio-visual alarm information after the parachute device is activated.

61. The method according to claim 47, **characterized in that** the parachute device comprises a plurality of parachute cords, the plurality of parachute cords comprises at least one elastic cord and at least one non-elastic cord, and a length of the elastic cord is less than a length of the non-elastic cord.

62. A parachute device, wherein the parachute device is mounted on an aircraft and in communication connection with the aircraft, **characterized in that** the parachute device comprises a sensing system and a controller; wherein
the controller is configured to execute instructions to implement the method according to any one of claims 25 to 46.

63. An aircraft, wherein the aircraft is in communication connection with a parachute device mounted on the aircraft, **characterized in that** the aircraft comprises a flight controller and a sensing system; wherein the flight controller is configured to execute instructions to implement the method according to any one of claims 47 to 61.

64. A computer-readable storage medium, **characterized in that** the storage medium stores computer instructions, which, when executed by a processor, implement the method according to any one of claims 25 to 61.

65. A flight platform, **characterized in that** the flight platform comprises an aircraft and a parachute device mounted on the aircraft, the aircraft comprises a flight controller and a first sensing system, the parachute device comprises a parachute controller and a second sensing system, wherein
the flight controller is configured to implement functions executed by the flight controller in a control system of the flight platform according to any one of claims 1 to 24,
the parachute controller is configured to implement functions executed by the parachute controller in the control system of the flight platform according to any one of claims 1 to 24.

66. A control method for a flight platform, **characterized in that** the flight platform comprises an aircraft and a parachute device mounted on the aircraft, the aircraft comprises a flight controller and a first sensing system, the parachute device comprises a parachute controller and a second sensing system, the flight controller is in communication connection with the parachute device, the control method of the flight platform comprises:
the flight controller determining whether a motion state of the flight platform is abnormal based on sensing data of the first sensing system, and in response to that the motion state of the flight platform is abnormal and the communication connection is normal, sending a parachute activation instruction to the parachute device via the communication connection to control the parachute device to activate; and
the parachute controller determining whether the motion state of the flight platform is abnormal based on sensing data of the second sensing system, and in response to that both the communication connection and the motion state of the flight platform are abnormal, the parachute controller controlling the parachute device to activate.

67. The method according to claim 66, **characterized in that** the parachute device is activated after a driving system of the flight platform is turned off.

68. The method according to claim 67, **characterized in that** the method further comprises: controlling the driving system to turn off in response to detecting an abnormal motion state of the flight platform.

69. The method according to claim 67, **characterized in that** the driving system is turned off in response to that the parachute device detects an abnormal motion state of the flight platform; and/or
the driving system is turned off in response to that the aircraft detects an abnormal motion state of the flight platform.

70. The method according to claim 69, **characterized in that** in response to a request from the parachute controller, the driving system is controlled to turn off, and the request is sent in response to that the parachute device detects the abnormal motion state of the flight platform; and/or
in response to a request from the flight controller, the driving system is controlled to turn off, and the request is sent in response to that the aircraft detects the abnormal motion state of the flight platform.

71. The method according to claim 66, **characterized in that** an energy system of the flight platform is turned off after the parachute device is activated.

72. The method according to claim 71, **characterized in that** the method further comprises: after controlling the parachute device to activate, turning off the energy system.

73. The method according to claim 71, **characterized in that** the parachute device is in communication connection with the energy system; the energy system is turned off by the parachute controller after the parachute device is activated.

74. The method according to any one of claims 71 to 73, **characterized in that** the energy system is turned off when a preset condition is satisfied; and the preset condition comprises at least one of:
a speed of the flight platform is greater than a preset speed threshold,
the flight platform descends below a preset altitude,
a first preset duration is passed after the parachute device is activated, or
a second preset duration is passed after the driving system of the flight platform is turned off.

75. The method according to claim 67, **characterized in that** the parachute device is capable of activation in response to a remote control signal sent by a remote control device.

76. The method according to claim 66, **characterized in that** the method further comprises: performing fault diagnosis on the parachute device.

77. The method according to claim 76, **characterized in that** a status indicator light is provided on the parachute device for indicating a fault diagnosis result.
